# EUROPEAN PATENT APPLICATION

(11) **EP 2 034 272 A1**
(43) Date of publication of application: **11.03.2009**
(21) Application number: 07017614.4
(22) Date of filing: 07.09.2007
(51) Int. Cl.: G01C 21/26, G06F 17/30

(54) **Computer-implemented method, system and computer program product for transmission of feedback information**

(71) Applicant: Jentro Technologies GmbH, 81671 München (DE)
(72) Inventor: Hempel, Erno, 81479 München (DE)
(74) Representative: Müller-Boré & Partner Patentanwälte

(57) **Abstract**

To support user-friendly services for error reporting or for possible feedback information on faulty or outdated digital maps and/or additional services of navigation systems, a computer- implemented method, system and computer program product for transmission of feedback- information is provided, the method comprising:
receiving a first message (130) comprising a registered error (132) in a digital map at a server (200) from a user (100) over a mobile device (120); and
sending a second message (250) for a possibility of providing feedback-information from the server (200) to the user (100) over a network, wherein the second message (250) comprises the registered error (132) and context information (134) on the registered error (132).

## Description

### Technical Field

The description is directed generally to navigation systems, in particular to additional services for such systems, and more particularly, to a computer-implemented method, a system and a computer program product for transmission of feedback information

### Background

In general, navigation systems are based on digital maps or operate on them, which are constructed or created at a particular point in time. Consequently, an accuracy and/or the correctness of navigation instructions, guidance and/or routing of a navigation system (substantially) depend on a correctness of the underlying digital map. Furthermore, a digital map may comprises errors, which occur during creation and/or arrangement of a digital map. Therefore, a navigation system may provide navigation instructions and/or routing which is error prone and/or out of date. For example, a navigation instruction may not correspond to a current course of streets. Furthermore, new streets (e.g. in a new district) may not yet be comprised in a digital map. Similar errors may also occur in the context of additional services (e.g. regarding point of interests (POIs)), e.g. long-term roadworks, gas stations, hotels, restaurants, and/or toll gates, which are computed or registered by a navigation system and/or displayed to a user on a display of a navigation system (e.g. by a small icon or graphical symbol on the display).

Consequently, both providers or suppliers of digital maps and/or navigation systems and users of navigation systems are interested in an easy and fast correction of faulty and/or outdated digital maps (or corresponding data) or digital map errors and/or faulty or outdated additional services and/or information for such navigation systems. On the one hand side, suppliers or providers of digital maps and/or navigation systems need feedback information about such errors from users. On the other hand, a user of such navigation systems, which may detect such errors in particular on his/her way (e.g. by car), should not be bothered with providing feedback information on registered errors.

It is one aspect of the present application to provide user-friendly services for reporting on faulty or outdated navigation instructions, routing, and/or additional services and/or information of navigation systems and underlying digital maps.

### Summary

In a general aspect, a computer-implemented method for transmission of feedback-information comprises:
receiving a first message comprising a registered error in a digital map at a server from a user over a mobile device; and
sending a second message for a possibility of providing feedback-information from the server to the user over a network, wherein the second message comprises the registered error and context information on the registered error.

By receiving a first message, a server (e.g. comprising a Web service or a service for navigation systems) may receive messages from at least one mobile device (e.g. navigation system, a mobile phone, a PDA, a PND, a UMTS-, GPRS-, LAN-, or wifi-connected device comprising a tool for navigation purposes or other mobile devices for mobile data processing, or radio frequency devices) over a (wireless) network. A mobile device may be inserted or incorporated in vehicles either directly or remote. A received (first) message may comprise (user-)registered errors e.g. in a digital map of a navigation system and/or errors on faulty or outdated additional services or information (e.g. POIs). A registered error may automatically trigger the sending of a (first) message to the server. In addition to the registered error, the (first) message may comprise context information. The context information may comprise navigation information, which has been used during generation of a navigation instruction and/or routing during (or near) the time when the error has been registered, a displayed navigation instruction, POI, a computed route, and/or context information which have been created by the user such as a digital photo or a digital audio file) during (or near) the time when the error has been detected). Furthermore, the context information may comprise information which have been created automatically by the mobile device at (or near) the time when the error as been registered such as a date and time and location of the registered error. Furthermore, the server may be operable to create a graphical representation of a navigation instruction and its deviating route due to error detection based on the registered error and the corresponding temporal and/or local or location data.

By receiving a first message (e.g. via an mobile network) and by sending a second message over a from the mobile network independent network (e.g. via the Internet), a break between using media and/or networks takes place. By receiving and sending a first and a second message via different networks (which are independent from each other), security and reliability aspects are considered. Furthermore, efficiency of a communication between a user, a server, and a provider or supplier of digital maps is enhanced. For example, a data rate of a mobile network is much smaller than a data rate of the Internet. Additionally, by sending messages via the Internet, user-friendliness is enhanced, e.g. by providing additional graphics and/or user interfaces, e.g. for evaluating additional information and providing of help menus.

In other words, an error is registered by the navigation system of the user and may (automatically) trigger sending of a (first) message to the server. The server sends (preferably depending on corresponding conditions) a processed (second) message to the user. The user may receive the (second) message with another system (e.g. an email system) and possibly with another device (i.e. a device which is different from the mobile device, e.g. a PC). Consequently, the user uses his/her mobile device for navigation purposes and another (suitable) device for creating feedback information, which refer to errors registered by the mobile device.

Accordingly, creation of feedback information on errors of a navigation instruction, navigation guidance, and/or additional navigation services (POI) is eased. The user merely triggers an automatic creation and sending of a (first) message by registering (e.g. by pressing a button) an error. The user may (at a later time) by using a suitable device and/or system provide (detailed) feedback information on the registered error. Thus, reporting on errors in navigation systems is eased. Complicated text message input is not required during registering of an error over the mobile device. An information process is rather automated. Beyond, by supporting incentive programs, a user may be encouraged to provide (detailed) feedback information on a (previously) registered error. Reliability of feedback information on faulty or outdated data of digital maps and/or additional (navigation) services or information of a user is enhanced for a provider or supplier of digital maps and/or navigation systems.

In order to further reduce an involvement of a user, a registered error and corresponding (automatically) generated context information (e.g. location, time, graphical representation of a navigation instruction and its deviation) and/or user created context information (e.g. digital photos, audio files, etc.) may be directly or automatically send from the server to a provider or supplier of digital maps and/or navigation systems, such that the user does not have to provide any further feedback information.

According to another aspect, sending the second message comprises:
sending a second message via email, SMS, and/or voice mail to the user.

According to yet another aspect, receiving the first message is triggered by a reporting unit (e.g. by pressing a software or hardware based key or button) of the mobile device.

According to yet another aspect, the reporting unit comprises a trigger, a speech recognition unit, and/or a camera device.

According to yet another aspect, the second message further comprises a graphical representation of a user trace deviating from a navigation instruction of the mobile device at the time of the registered error.

According to yet another aspect, the second message further comprises at least one help menu.

According to yet another aspect, sending the second message further comprises:
based on a trust level of a profile of the user, sending a second message directly to a provider of the digital map and/or the mobile device.

In another general aspect there is provided a computer-program product comprising computer readable instructions, which when loaded and run in a computer system and/or computer network system, cause the computer system and/or the computer network system to perform a method as described.

In yet another general aspect, there is provided a system for transmission of feedback-information, the system comprising:
at least one mobile device;
a server operable to:
   receive a first message comprising a registered error in a digital map from a user over the mobile device; and
send a second message for a possibility of providing feedback-information from to the user over a network, wherein the second message comprises the registered error and context information on the registered error.

In a further aspect, the system is operable to perform operations according to any one of the methods as described.

The subject matter described in this specification can be implemented as a method or as a system or using computer program products, tangibly embodied in information carriers, such as a CD-ROM, a DVD-ROM, a semiconductor memory, and a hard disk. Such computer program products may cause a data processing apparatus to conduct one or more operations described in this specification.

In addition, the subject matter described in this specification can also be implemented as a system including a processor and a memory coupled to the processor. The memory may encode one or more programs that cause the processor to perform one or more of the method acts described in this specification. Further the subject matter described in this specification can be implemented using various MRI machines.

Details of one or more implementations are set forth in the accompanying exemplary drawings and exemplary description below. Other features will be apparent from the description and drawings, and from the claims.

### Technical Terms

Following technical terms are widely used throughout the description. The terms may refer to but are not limited to the subsequently given explanations.

### Navigation System:

A navigation system may comprise an electronic device, which may be generally based on radio navigation. A navigation system may comprise one or more receiving units, which tests at least three signals from a plurality of (coordinated) senders on a possible shifting and computes based on the received data a local position of the device. Furthermore, a navigation system may transmit a computed local position into a digital map. Additionally, a navigation system may comprise software for routing and/or navigation guidance.

### Digital Map:

A digital map may be a machine readable representation of a local area, wherein values of its attributes are stored, manipulated, and displayed by a computer system. A digital map comprise a storage device (e.g. a database or a file system) for geographical or location data and a (geo-) information system, which is operable to compute or process a graphical representation from the stored data (unlike analog maps). The data may be stored in discrete, quantified units or digits. A computation may be based on stored vector data or raster data.

### Point Of Interest:

Point Of Interest (POI) is preferably used in the field of computer-supported navigation systems and/or routing devices. A POI may be an address and/or a location such as a restaurant, a gas station, a hotel, a parking lot, or further information which might be of interest for a user. A POI may be represented by a small icon or graphical symbol in a digital map. Furthermore, a navigation system may visually or acoustically point to a POI. Points or locations which are particularly characteristic may be referred to as land marks and may be used to support a user in his/her orientation.

### Route/Navigation Instruction/Guidance Instruction:

In general, a route may describe a path between two (geographic) points on a (digital or analog) map considering existing traffic routes (e.g. streets). In the context of computer-supported navigation systems, which may be based on GPS-data, a route may be defined by an ordered list of points between a (local or geographic) starting point and a (local or geographic) ending point. A navigation instruction may comprise an instruction for a user by a navigation system from one point to a (local) successor point of a route. A guidance instruction may comprise an ordered set of navigation instructions from a starting point to an ending point.

### Brief Description of the Drawings

Figure 1 shows a block diagram of an exemplary system for transmission of feedback information.
Figure 2 shows an exemplary block diagram of a registered error in a digital map of a navigation system.
Figure 3 shows an exemplary block diagram for transmission of feedback information, wherein a provider or supplier may complete a user profile and/or a registered error with context information.
Figure 4 shows an exemplary block diagram of a system for transmission of feedback information, wherein a message is directly or automatically send to a provider or supplier or to the user depending on a user profile.
Figure 5 shows an exemplary block diagram of a system for transmission of feedback information, wherein a message is directly or automatically send to a provider or supplier based on a user profile.
Figure 6 shows an exemplary block diagram of a computer (network) system.

### Detailed Description

In the following, a detailed description of examples will be given with reference to the drawings. It should be understood that various modifications to the examples may be made. In particular, elements of one example may be combined and used in other examples to form new examples.

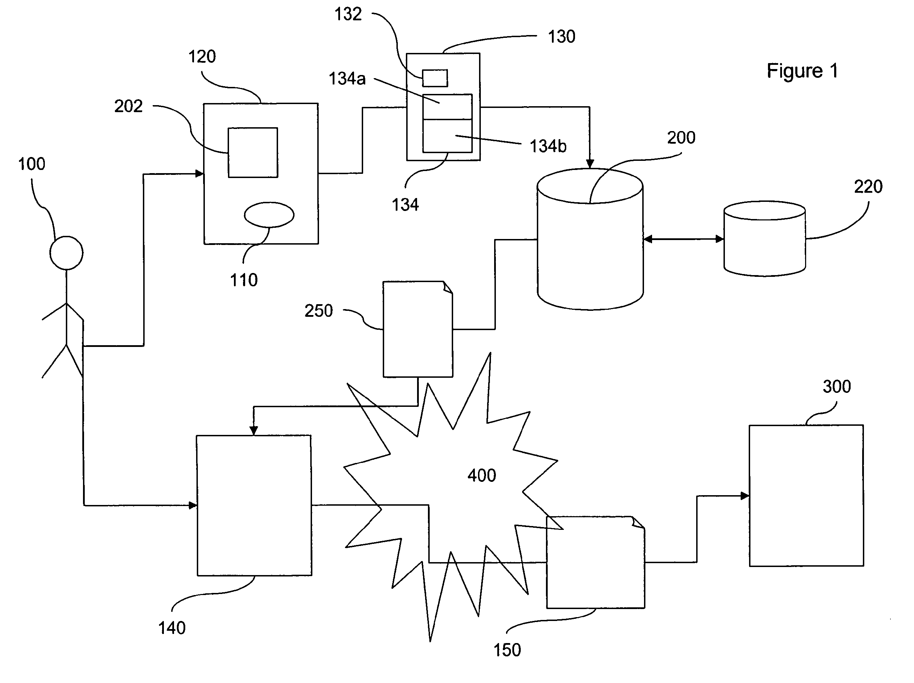

**Fig. 1** shows an exemplary system for (temporally delayed) transmission of feedback information on a faulty or outdated navigation instruction, guidance instruction, routing , and/or additional services or information (POI) of a navigation system based on a (at least partially) faulty digital map or a digital map which comprises faulty or outdated (geographic or location) data.

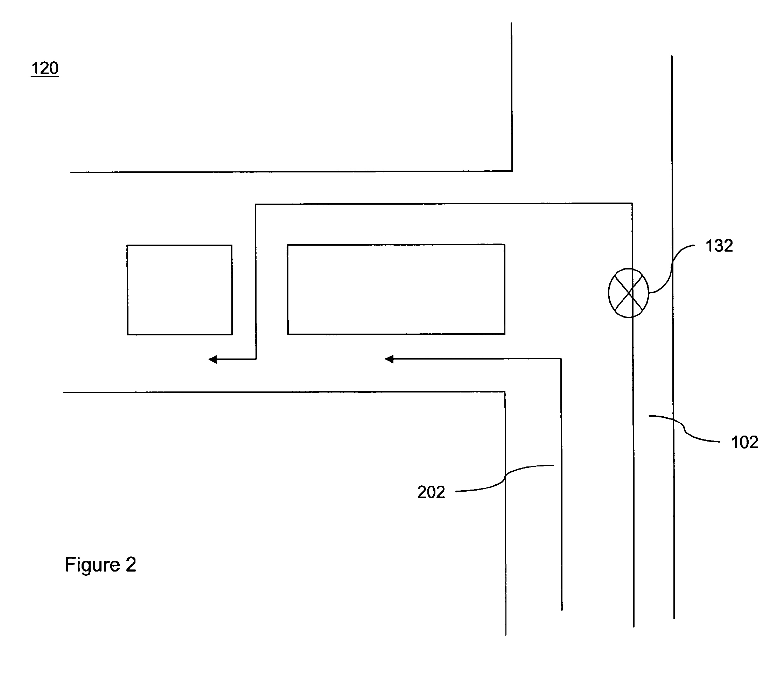

In one implementation, a user 100 receives on a mobile device 120 comprising a navigation system a navigation instruction 202. The navigation instruction 202 is displayed to the user 100, e.g. based on a digital device on a display of the mobile device (navigation system)120. Fig. 2 shows an exemplary, schematic graphical representation of a navigation instruction 202 of a navigation system 120, which can be displayed on the display of the navigation system 120.

In one example, a user 100 realized that he/she can not follow a provided navigation instruction 202. For example, the street into which the user turn off (as shown in Fig. 2) is a one way street. The user 100 follows an alternative route 102, which deviates from the route suggested by the navigation system 120 (i.e. from the navigation instruction 202). The user 100 registers on his/her navigation system 120, e.g. by pressing a reporting unit 110 such as a software or hardware supported key or button of the navigation system 120 an error 132 (e.g. the faulty navigation instruction 202). By registering the error 132 of a digital map or data comprised in a digital map underlying the navigation system 120, the user 100 triggers a (preferably automatic) sending of a message 130 to a server 200. In one example, the server 200 comprises a storage device (e.g. a database or a file system) to store received messages 130. Furthermore, the server 200 comprises a data processing unit for processing and/or complementing a message 130 received from a navigation system 120 of a user 100.

A message 130 received at the server 200 from a navigation system 120 of a user 100 and triggered by a registered error 132, may comprise context information 134. In one example, the message 130 comprises a date and time, when the error 132 has been registered or realized. The message 130 preferably comprises geographic or location data (e.g. geographical positions) where the error 132 has been registered. Furthermore, the message 130 comprises a part of digital map (or corresponding data), which displays a navigation instruction 202 and a trace 102 followed by the user 100 instead, as exemplary shown in **Fig. 2****.** Furthermore, the message 130 may comprise information about the vehicle, e.g. adjacent POI, the speed during the registration of the error 132. The context information 134 may refer to information, which have been registered immediately before and/or after the registration of the error 132 (e.g. by pressing a key or a button), preferably in a temporal distance of two minutes before and/or after the time of the registration of the error 132, more preferably in a temporal distance of 30 seconds before and/or after the time of the registration of the error 132. Furthermore, the context information 134 may preferably depend on a predefined or which can be predefined local distance from the location or position of the registration of the error 132, preferably in a distance not larger than 1 km, more preferably in a distance not larger than 500 m, most preferably in a distance not larger than ca. 250m. The context information 134 may also depend whether the refer to the user trace 102 or not.

In other words, by activating a reporting unit or trigger 110 of a navigation system 120 by a user 100, a message 130 is (preferably automatically) created by a navigation system 120 of the user 100. The message 130 comprises additional or ancillary (context) information 134 in addition to a (user) registered error 132. At least a part of the context information 134a may be (preferably automatically) generated by the navigation system 120 of the user 100 with respect to a registered error 132. The (automatically) generated context information 134a may, in particular, refer to time, location or position, a navigation instruction 202, a user trace 102 deviating from the instruction 202 and/or displayed POI. The message 130 is send to a server 200 (e.g. comprising a Web service such as a service for navigation systems) and stored at the server 200. The server 200 (preferably automatically) generates or computes from the message 130 (or data comprised in the message) using the registered error 132, the navigation instruction 202, the user trace 102 between the two (geographic or location) points a graphical representation, which may be (automatically) represented in a digital map.

A reporting unit 110 may be incorporated into a navigation system 120 or may be provided separate from a navigation system 120.

In one example, a reporting unit 110 is a trigger such as a software-based or hardware-based key or button on the navigation system 120 or at another position in a vehicle (e.g. at a steering wheel), which may be coupled to the navigation system or in signal connection.

In one example, a reporting unit 110 of a navigation system 120 comprises a speech recognition system. Consequently, a user may register an error 132 by a verbal remark or comment, which may trigger the sending of a message 130 to a server 200. In this case, an audio file is stored at the server 200. Furthermore, during registration of an error 132 by a user 100, context information 134b may be automatically or by the user 100 generated and send to the server 200.

In another example, the reporting unit 110 comprises a (digital) camera device such that a user 100 may take at least one photo from the location when he/she has registered an error 132 by triggering the reporting unit 110. Furthermore, the reporting unit 110 may comprise a receiving unit for (preferably digitally) receiving sound and speech sequences. A user 100 may thus produce a speech note when registering an error 132 by triggering the reporting unit 110. The note may comprise context information 134b on the error 132 and/or on the location where the error 132 has been registered.

After the server 200 has received a message 130 comprising a registered error 132 and context information 134 (e.g. information 134a automatically generated by the navigation system 120 of the user 100 based on context information or information 134b complemented by the user through audio and/or picture files), the server 200 sends a message 250 over a network 400 (e.g. by email, SMS, or voice mail) to a suitable system and/or device 140 of the user 100. The message 250 may comprise data and/or information in support of generating feedback information on a registered error 132 by the user 100. The message 250 may comprise the registered error 250, context information 134a on the error 132, which are preferably automatically generated by the navigation system 120 of the user in the context of the time and location of the registered error 132 and context information 134b which have been added by the user such as a speech note (audio file) and/or at least one photo (picture file). The network 400 (e.g. the Internet), the second message 250 is send over, is independent from the network (e.g. a mobile (telephone) network), the first message 130 is received over, such that a break of used media exists.

The user may retrieve the received message 250 at a later point in time than he/she has registered the error 132 over a suitable system and/or device 140 (e.g. via email, SMS, or voice mail). Hence, registration of an error 132 and generation of feedback information 150 on the registered error 132 are temporally or timely distributed such that a user 100 is not forced to report on an error 132 on his way at the time he/she has registered the error 132.

In one example, a user 100 retrieves the message 250 from the server 200 at his/her email system at a PC 140, to generate feedback information on a previously registered error 132. After the user 100 has generated (preferably detailed) feedback information on the registered error 132, the user 100 sends a message 150 comprising the feedback information over the network 400 to a system 300, e.g. a provider or supplier of one or more digital maps and/or navigation systems, wherein at least one of the digital maps and/or navigation systems have been used by the user 100 when he/she has registered the error 132.

In other words, a navigation system 120 is used for location tagging. Location (or geo) tagging is a process for annotating e.g. digital maps with additional geographic or location data (geographic or location metadata), which may be used by a computer system such as a navigation system 120. For example, the navigation system 120 may annotate a registered error 132 with geographic or location data before sending the error 132 in a message 130 to a server 200. The navigation system 120 is however not used to input or generate feedback information about the registered error 132 by a user 100. For this purpose, the user 100 may use another device and/or system 140 at a later time (i.e. at a time after the user 100 has registered the error 132 at his/her navigation system 120). Hence a break between used media and/or systems take place as well as error registration 132 and generation of feedback information 150 is temporally or timely distributed.

In one implementation, a message 250 for a possibility of providing feedback-information 150 comprises a message 130 generated by a navigation system 120.

Furthermore, the message 250 comprises a graphical representation of a navigation instruction 202, a user trace 102 deviating from the instruction 202 between the two (location or geographic) points of the instruction 202, at least one help menu for the user 100, and/or at least one audio file and/or picture file as context information 134. The help menu may support the user 100 in generating feedback information 150 on the registered error 132.

The help menu may comprise (preferably hierarchically) ordered menu items to support the user 100 in generating feedback-information 150 on the registered error 132. In one example, the help menu may comprise a choice menu to classify the registered error 132, e.g. a new street, a street has been turned into a one way street, and/or a traffic light has been turned into a traffic circle.

In one example, a registered error 132 is a faulty or outdated POI displayed on a display of a navigation system 120 of a user 100. In another example, a registered error is a street, which is not displayed by the navigation system 100 since the street is not comprised in a digital map underlying the navigation system 120.

A provider or supplier 300 of the navigation system 120 may (in particular under consideration of the received feedback information 150) perform corresponding modifications and/or changes of corresponding (location) data of a digital map. Furthermore, the provider 300 may check whether an error really exists, e.g. by checking whether an as one way street indicated street actually is a one way street.

In a further example, a (user) registered error 132 received at a server 200 in a message 130 from a navigation system 120 of a user 100, may be complemented with a user profile by the server 200. The user profile may be stored in a further storage device 220 (e.g. a database or file system) coupled or connected with the server 200. The user profile may comprise data and/or information about the user 100, and/or data how fast the user had been when he/she as registered at least one error 132.

In one implementation, the server 200 determines depending on a speed of a user 100 during registration of an error 132, i.e. when a reporting unit 110 of a navigation system 120 of the user is triggered 110 (e.g. by the user 110 himself), whether the user 100 has merely due to his/her speed chosen a trace 102 deviating from a navigation instruction 202 or whether the navigation instruction is faulty.

Context information and/or data may complement registered errors 132 and corresponding feedback information 150 of a user 100. Such information and/or data may be provided by a provider or supplier 300 of digital maps and/or navigation systems and/or by the server 200. For example, depending on a user profile, a level of trust may be stored for each user 100 at the server 200 or in a storage device 220 for user profiles. connected to the server 200.

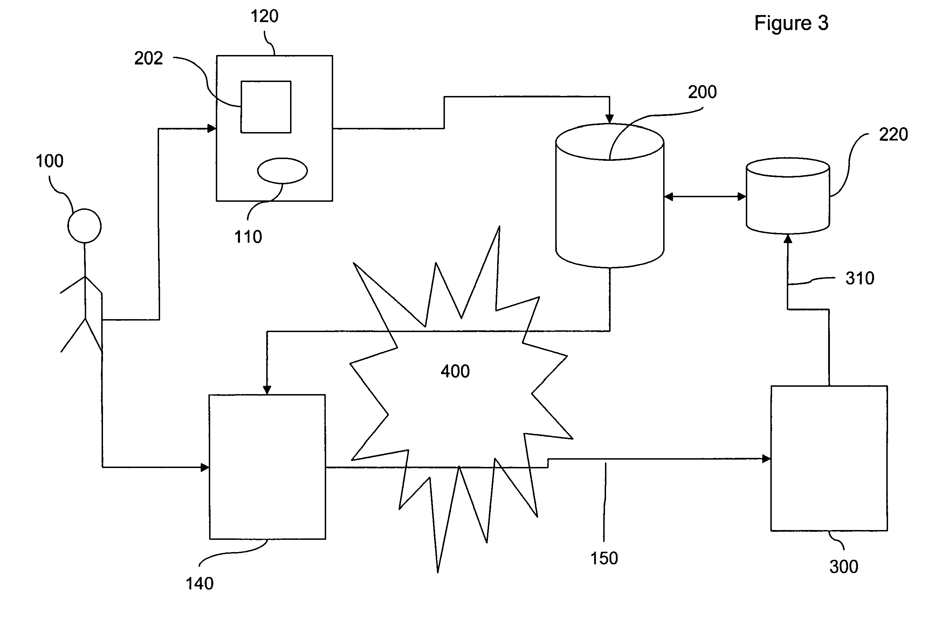

As shown in **Fig. 3****,** a supplier or provider 300 of digital maps and/or navigation systems may complement a user profile of a user 100 with context information and/or data. For example, the provider 300 may increase a level of trust of a user 100, if the user 100 has provided in the past several (i.e. a predefined or a predefinable number of times) the provider 300 with supportive or correct feedback information 150 corresponding to at least one previously registered error 132 (310).

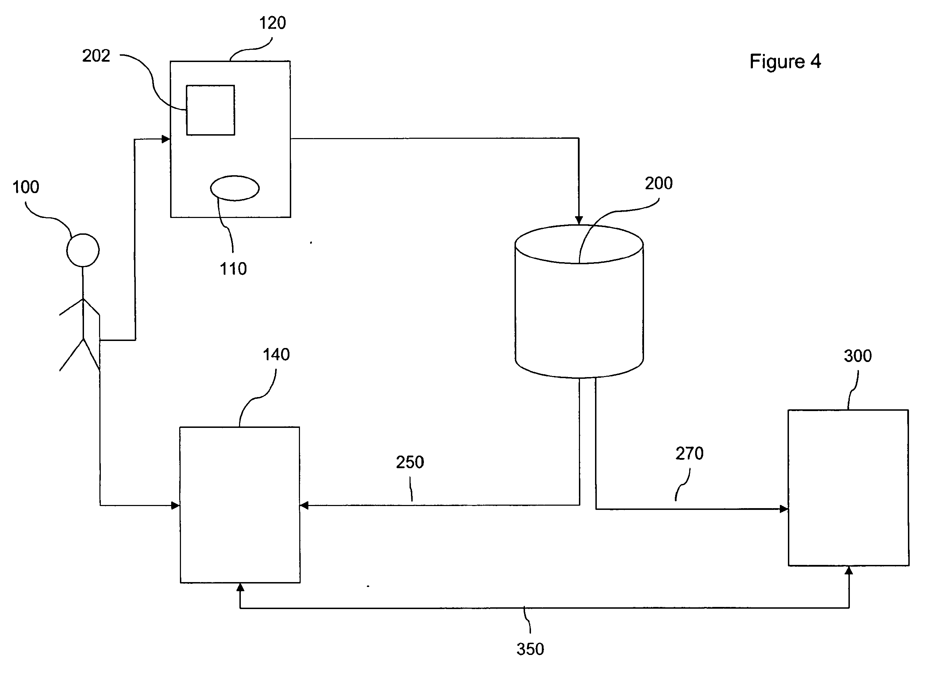

Consequently and as shown with reference to **Fig. 4****,** depending on a level of trust of a user 100, a message 270 comprising a registered error 132 and context information 134 and received at a server 200 from a navigation system 120, may be send directly to a provider 300. In case the level of trust is less then a predefined or predefinable value, a message 250 is send to the user 100 such that the user 100 may generate feedback information 150 corresponding to the registered error 132 and send the feedback information 150 to the provider 300.

Provided that the message 130 comprises context information 134 corresponding to a registered error 134, which allows a (at least partially) processing of the error report without interaction with a user 100, a decision whether a message 250 is send to a user 100 or directly 270 to a provider 300 may be performed based on a processability of the context information 134. For example, if the context information 134 comprise an audio file, a decision whether a message 250 is send to a user 100 or directly 270 to a provider 300 may be performed based on whether a speech analysis. The speech analysis may determine whether the audio file comprises one or more (predefined or predefinable) key words. In case the speech analysis evaluates to true, the message 130 is directly send to the provider 300. Otherwise a message 250 is generated, added with additional information (by the server 200) such as a help menu and send to the user 100. Speech recognition and/or speech analysis may be performed at the server 200 or at the navigation system 120.

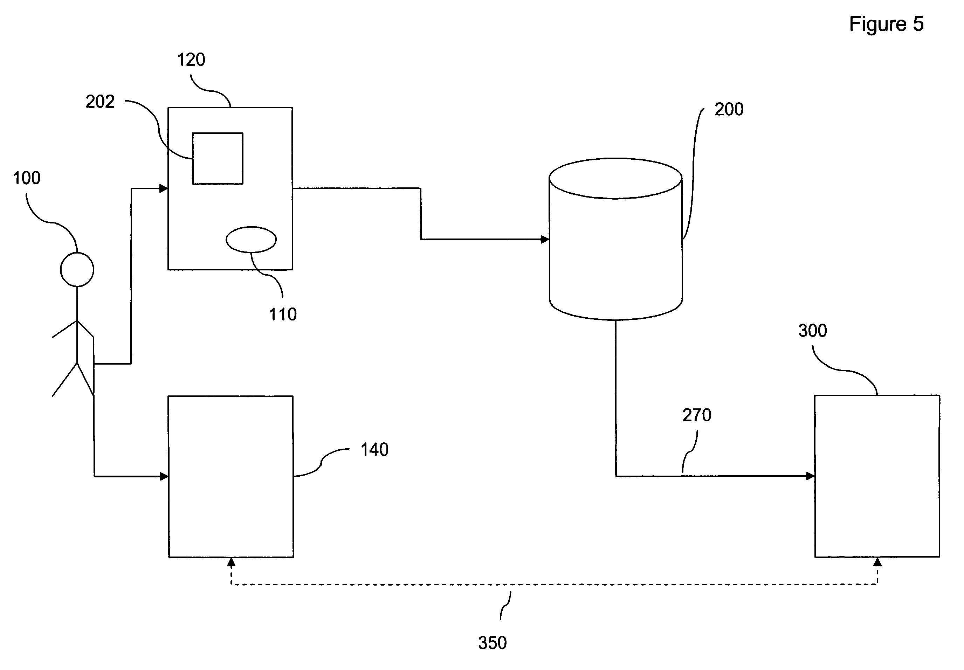

In case a message 130 is directly send to the provider 300 due to a trust level over a predefined or predefinable value, the provider 300 may independently process the message 130 and may if required directly contact 350 the user 100 (e.g. via email or via voice mail), as shown in **Fig. 5****.** In one example, the user 100 may provide the provider 300 with context information on the registered error 132.

In one implementation, a server 200 may comprise an incentive program, which based on a level of trust of a user 100 and/or a predefined or predefinable number of feedback information 150 provided by a user 100. In one example, a user 100 may participate in a drawing of lots of a provider 300, if the user 100 has send at least a predefined or predefinable number of (if necessary, correct) feedback information 150 based on registered errors 132 to the provider 300.

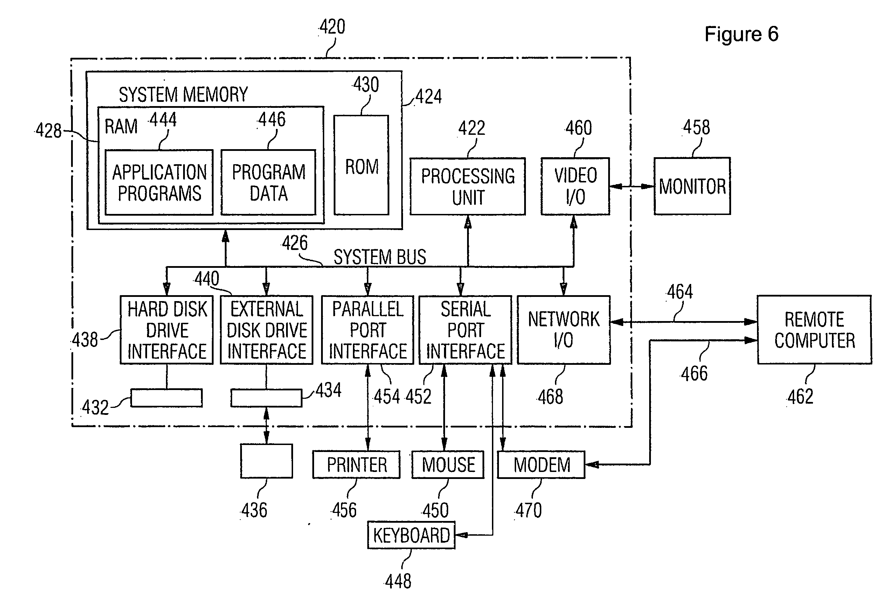

With reference to **Fig. 6****,** an exemplary system for implementing the invention includes a general purpose computing device in the form of a conventional computing environment 420 (e.g. personal computer), including a processing unit 422, a system memory 424, and a system bus 426, that couples various system components including the system memory 424 to the processing unit 422. The processing unit 422 may perform arithmetic, logic and/or control operations by accessing system memory 424. The system memory 424 may store information and/or instructions for use in combination with processing unit 422. The system memory 424 may include volatile and non-volatile memory, such as random access memory (RAM) 428 and read only memory (ROM) 430. A basic input/output system (BIOS) containing the basic routines that helps to transfer information between elements within the personal computer 420, such as during start-up, may be stored in ROM 430. The system bus 426 may be any of several types of bus structures including a memory bus or memory controller, a peripheral bus, and a local bus using any of a variety of bus architectures.

The personal computer 420 may further include a hard disk drive 432 for reading from and writing to a hard disk (not shown), and an external disk drive 434 for reading from or writing to a removable disk 436. The removable disk may be a magnetic disk for a magnetic disk driver or an optical disk such as a CD ROM for an optical disk drive. The hard disk drive 432 and external disk drive 434 are connected to the system bus 426 by a hard disk drive interface 438 and an external disk drive interface 440, respectively. The drives and their associated computer-readable media provide nonvolatile storage of computer readable instructions, data structures, program modules and other data for the personal computer 420. The data structures may include relevant data of the implementation of the method for transmission of feedback information, as described in more details below. The relevant data may be organized in a database, for example a relational or object database.

Although the exemplary environment described herein employs a hard disk (not shown) and an external disk, it should be appreciated by those skilled in the art that other types of computer readable media which can store data that is accessible by a computer, such as magnetic cassettes, flash memory cards, digital video disks, random access memories, read only memories, and the like, may also be used in the exemplary operating environment.

A number of program modules may be stored on the hard disk, external disk, ROM 430 or RAM 428, including an operating system (not shown), one or more application programs 444, other program modules (not shown), and program data 446. The application programs may include at least a part of the functionality as detailed in Figs. 1 to 5.

A user may enter commands and information, as discussed below, into the personal computer 420 through input devices such as keyboard 448 and mouse 450. Other input devices (not shown) may include a microphone (or other sensors), joystick, game pad, scanner, or the like. These and other input devices may be connected to the processing unit 422 through a serial port interface 452 that is coupled to the system bus 426, or may be collected by other interfaces, such as a parallel port interface 454, game port or a universal serial bus (USB). Further, information may be printed using printer 456. The printer 456, and other parallel input/output devices may be connected to the processing unit 422 through parallel port interface 454. A monitor 458 or other type of display device is also connected to the system bus 426 via an interface, such as a video input/output 460. In addition to the monitor, computing environment 420 may include other peripheral output devices (not shown), such as speakers or other audible output.

The computing environment 420 may communicate with other electronic devices such as a computer, telephone (wired or wireless), personal digital assistant, television, or the like. To communicate, the computer environment 420 may operate in a networked environment using connections to one or more electronic devices. **Fig. 6** depicts the computer environment networked with remote computer 462. The remote computer 462 may be another computing environment such as a server, a router, a network PC, a peer device or other common network node, and may include many or all of the elements described above relative to the computing environment 420. The logical connections depicted in **Fig. 6** include a local area network (LAN) 464 and a wide area network (WAN) 466. Such networking environments are commonplace in offices, enterprise-wide computer networks, intranets and the Internet.

When used in a LAN networking environment, the computing environment 420 may be connected to the LAN 464 through a network I/O 468. When used in a WAN networking environment, the computing environment 420 may include a modem 470 or other means for establishing communications over the WAN 466. The modem 470, which may be internal or external to computing environment 420, is connected to the system bus 426 via the serial port interface 452. In a networked environment, program modules depicted relative to the computing environment 420, or portions thereof, may be stored in a remote memory storage device resident on or accessible to remote computer 462. Furthermore other data relevant to the application of the insurance claim management evaluation method (described in more detail further below) may be resident on or accessible via the remote computer 462. The data may be stored for example in an object or a relation database. It will be appreciated that the network connections shown are exemplary and other means of establishing a communications link between the electronic devices may be used.

The above-described computing system is only one example of the type of computing system that may be used to implement the method for transmission of feedback information.

### List of Reference Numerals

- 100: user
- 102: user trace
- 110: reporting unit
- 120: mobile device
- 130: first message
- 132: registered error
- 134: context information
- 134a: automatically generated context information
- 134b: user-defined context information
- 140: computing device
- 150: feedback information message
- 200: server
- 202: navigation instruction
- 220: storage device
- 250: second message
- 300: provider
- 310: supply to user profile
- 350: exchange of additional data
- 400: network
- 420: conventional computing environment
- 422: processing unit
- 424: system memory
- 426: system bus
- 428: random access memory (RAM)
- 430: read only memory (ROM)
- 432: hard disk drive
- 434: external disk drive
- 436: removable disk
- 438: hard disk drive interface
- 440: external disk drive interface

- 444: one or more application programs
- 446: program data
- 448: keyboard
- 450: mouse
- 452: serial port interface
- 454: parallel port interface
- 456: printer
- 458: monitor
- 460: video input/output
- 462: remote computer
- 464: local area network (LAN)
- 466: wide area network (WAN)
- 468: network I/O
- 470: a modem

## Claims

1. Computer-implemented method for transmission of feedback-information, the method comprising:
receiving a first message (130) comprising a registered error (132) in a digital map at a server (200) from a user (100) over a mobile device (120); and
sending a second message (250) for a possibility of providing feedback-information (150) from the server (200) to the user (100) over a network (400), wherein the second message (250) comprises the registered error (132) and context information (134) on the registered error (132).

2. Method according to claim 1, wherein sending the second message (250) comprises:
sending a second message (250) via email, SMS, and/or voice mail to the user (100).

3. Method according to claim 1 or 2, wherein receiving the first message (130) is triggered by a reporting unit (110) of the mobile device (120).

4. Method according to claim 3, wherein the reporting unit (110) comprises a trigger, a speech recognition unit, and/or a camera device.

5. Method according to any one of the preceding claims, wherein the second message (250) further comprises a graphical representation of a user trace (102) deviating from a navigation instruction (202) of the mobile device (120) at the time of the registered error (132).

6. Method according to any one of the preceding claims, wherein the second message (250) further comprises at least one help menu.

7. Method according to any one of the preceding claims, wherein sending the second message (250) further comprises:
based on a trust level of a profile of the user (100), sending a second message (250) directly to a provider (300) of the digital map and/or the mobile device (120).

8. Computer program product comprising computer readable instructions, which when loaded and run in a computer and/or computer network system, causes the computer system and/or the computer network system to perform operations according to a method of anyone of the preceding claims.

9. System for transmission of feedback-information, the system comprising:
at least one mobile device (120);
a server (200 operable to:
receive a first message (130) comprising a registered error (132) in a digital map from a user (100) over the mobile device (120); and
send a second message (250) for a possibility of providing feedback-information (150) from to the user (100) over a network (400), wherein the second message (250) comprises the registered error (132) and context information (134) on the registered error (132).

10. System according to claim 9, wherein the server (200) is further operable to:
send the second message (250) via email, SMS, and/or voice mail to the user (100).

11. System according to claim 9 or 10, wherein the mobile device (120) is operable to:
trigger the sending of the first message (130) by a reporting unit (110) of the mobile device (120).

12. System according to claim 11, wherein the reporting unit (110) comprises a trigger, a speech recognition unit, and/or a camera device.

13. System according to any one of claims 9 to 12, wherein the second message (250) further comprises a graphical representation of a user trace (102) deviating from a navigation instruction (202) of the mobile device (120) at the time of the registered error (132).

14. System according to any one of claims 9 to 13, wherein the second message (250) further comprises at least one help menu.

15. System according to any one of claims 9 to 15, wherein the server (200) is further operable to:
send the second message (250) directly to a provider (300) of the digital map and/or the mobile device (120) based on a trust level of a profile of the user (100).

## Amended claims

### Amended claims in accordance with Rule 137(2) EPC.

**1.** Computer-implemented method for transmission of feedback-information, the method comprising:
receiving a first message (130) comprising a registered error (132) in a digital map at a server (200) from a user (100) over a mobile device (120);
**characterized by**
sending a second message (250) for a possibility of providing feedback-information (150) from the server (200) to the user (100) over a network (400), wherein the second message (250) comprises the registered error (132) and context information (134) on the registered error (132), wherein the context information comprise navigation information which has been used during generation of a navigation instruction and/or routing during or near the time when the error has been registered, and
wherein the first message and the second message are received and sent via different networks, respectively.

**2.** Method according to claim 1, wherein sending the second message (250) comprises:
sending a second message (250) via email, SMS, and/or voice mail to the user (100).

**3.** Method according to claim 1 or 2, wherein receiving the first message (130) is triggered by a reporting unit (110) of the mobile device (120).

**4.** Method according to claim 3, wherein the reporting unit (110) comprises a trigger, a speech recognition unit, and/or a camera device.

**5.** Method according to any one of the preceding claims, wherein the second message (250) further comprises a graphical representation of a user trace (102) deviating from a navigation instruction (202) of the mobile device (120) at the time of the registered error (132).

**6.** Method according to any one of the preceding claims, wherein the second message (250) further comprises at least one help menu.

**7.** Method according to any one of the preceding claims, wherein sending the second message (250) further comprises:
based on a trust level of a profile of the user (100), sending a second message (250) directly to a provider (300) of the digital map and/or the mobile device (120).

**8.** Computer program product comprising computer readable instructions, which when loaded and run in a computer and/or computer network system, causes the computer system and/or the computer network system to perform operations according to a method of anyone of the preceding claims.

**9.** System for transmission of feedback-information, the system comprising:
at least one mobile device (120);
a server (200) operable to:
receive a first message (130) comprising a registered error (132) in a digital map from a user (100) over the mobile device (120);
**characterized in that** the server (200) is further operable to:
send a second message (250) for a possibility of providing feedback-information (150) from to the user (100) over a network (400), wherein the second message (250) comprises the registered error (132) and context information (134) on the registered error (132), wherein the context information comprise navigation information which has been used during generation of a navigation instruction and/or routing during or near the time when the error has been registered, and
wherein the first message and the second message are received and sent via different networks, respectively.

**10.** System according to claim 9, wherein the server (200) is further operable to:
send the second message (250) via email, SMS, and/or voice mail to the user (100).

**11.** System according to claim 9 or 10, wherein the mobile device (120) is operable to:
trigger the sending of the first message (130) by a reporting unit (110) of the mobile device (120).

**12.** System according to claim 11, wherein the reporting unit (110) comprises a trigger, a speech recognition unit, and/or a camera device.

**13.** System according to any one of claims 9 to 12, wherein the second message (250) further comprises a graphical representation of a user trace (102) deviating from a navigation instruction (202) of the mobile device (120) at the time of the registered error (132).

**14.** System according to any one of claims 9 to 13, wherein the second message (250) further comprises at least one help menu.

**15.** System according to any one of claims 9 to 15, wherein the server (200) is further operable to:
send the second message (250) directly to a provider (300) of the digital map and/or the mobile device (120) based on a trust level of a profile of the user (100).
